# EUROPEAN PATENT SPECIFICATION

(11) **EP 2 740 295 B1**
(45) Date of publication and mention of the grant of the patent: **17.10.2018**
(21) Application number: 12831753.4
(22) Date of filing: 31.08.2012
(51) Int. Cl.: H04W 36/00, H04W 36/36

(54) **METHOD, APPARATUS, SYSTEM AND COMPUTER PROGRAM FOR ENABLING MOBILITY OF A MOBILE DEVICE WHILE IN AN SEMI-IDLE STATE**
VERFAHREN, VORRICHTUNG, SYSTEM UND COMPUTERPROGRAMM ZUM ERMÖGLICHEN DER MOBILITÄT EINES MOBILEN ENDGERÄTES IN EINEM SEMI-RUHESTAND
PROCÉDÉ, APPAREIL, SYSTÈME ET PROGRAMME D'ORDINATEUR POUR FACILITER LA MOBILITÉ D'UN TERMINAL MOBILE EN ÉTAT DE SEMI-VEILLE

(30) Priority: 12.09.2011 US 201161533458 P
(43) Date of publication of application: 11.06.2014
(73) Proprietor: Nokia Technologies Oy, 02610 Espoo (FI)
(72) Inventor: KOSKINEN, Jussi-Pekka, FI-90630 Oulu (FI); KOSKELA, Jarkko Tuomo, FI-90510 Oulu (FI); DALSGAARD, Lars, FI-90230 Oulu (FI); KESKITALO, Ilkka Antero, FI-90240 Oulu (FI)
(74) Representative: Ruuskanen, Juha-Pekka
(86) International application number: PCT/FI2012/050844
(87) International publication number: WO 2013/038052

(56) References cited:
- WO-A1-2008/023204
- WO-A1-2010/057128
- WO-A1-2010/057128
- WO-A1-2010/063327
- US-A1- 2007 224 992
- US-A1- 2007 224 992
- US-A1- 2010 330 993
- SAMSUNG: "Handover procedure for LTE_ACTIVE UEs", 3GPP DRAFT; R2-060078, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20060105, 5 January 2006 (2006-01-05), XP050130235, [retrieved on 2006-01-05]

## Description

### TECHNOLOGICAL FIELD

Embodiments of the present invention relate generally to wireless communications technology and, more particularly, relate to a method, apparatus, system and computer program product for enhancing a mobile terminal connected mode and a connected mode mobility.

### BACKGROUND

Despite radio network planning and coverage verification, situations exist where a mobile terminal may experience bad connection quality leading either to degraded data throughput and/or connection failures. Such situations are likely at a serving cell edge (hereinafter cell edge) where the mobile terminal is configured to measure and identify candidate cells for a possible handover. In some cases, a bad radio condition quality may be caused by fast or slow (shadowing) fading, excessive interference (either in uplink or downlink), and/or wrongly set mobility parameters.

In instances of bad radio condition quality and before a connection is lost, a mobility event may be configured to trigger measurement reporting in order to initiate a handover to a new serving cell (target cell). The network may then be configured to send a handover (HO) command that includes information about the new serving cell. The mobile terminal may also be configured to send a HO complete message to an indicated target cell to confirm and complete the HO procedure.

However, there are several phases where the HO procedure may fail. For example, the mobile terminal drops the connection before the configured event is triggered; the mobile terminal is unable to send the measurement report to the network due to a lost connection, an access point is not able to receive/decode a measurement report, a HO command is not successfully received by the mobile terminal, and/or a mobile terminal is unable to establish a connection with a target cell.

In an instance in which the mobile terminal is unable to restore the connection with the target cell by a call re-establishment procedure, the mobile terminal may transition into an idle state and then may start a cell selection procedure in order to find suitable neighbor cells. The connection re-establishment procedure may also fail not only due to radio circumstances but also if the mobile terminal context is not available on the selected cell. This could be a typical situation in cases where the HO procedure has encountered problems in the early stages.

In some instances, a connection may be lost not only during mobility situations but also due to bad network coverage in certain areas of the network. Additionally, the interference caused by neighbor cells (intra frequency) may be the cause of the connection problems. In such cases, the mobility measurements may not have been triggered and the mobile terminal may begin to see problems in the layer 1 (L1) connection. If the L1 connection is not restored for a given time period, the mobile terminal may eventually encounter radio link failure (RLF). The mobile terminal may try first to re-establish the connection so that the radio resource control (RRC) connection is not lost. If that fails, the mobile terminal may enter into an idle state and then, for example, the mobile terminal may start the time consuming cell selection procedure.

Once the connection failure occurs, there may be a delay before the mobile terminal is able to restore the connection. The cell selection may take relatively long time which may cause degradation in the data throughput and mobility behavior, for example. In many scenarios this would lead to bad user experience e.g. dropped voice call etc. Global System for Mobile Communications (GSM) Enhanced Data rates for Global Evolution (EDGE) Radio Access Network (GERAN) 45.008, Third Generation Partnership Project (3GPP) TS 25.331 and 3GPP 36.300, 36.304, 36.133, and 36.331 are non-patent prior art.

Document WO2010/057128 discloses a UE-controlled mobility method wherein the UE receives a HO command earlier than in conventional systems, i.e. even though the target cell is weaker than the source cell, and include an instruction to delay the HO until a specified condition is met, i.e. until the target becomes stronger than the source cell.

Document US2007/224992 discloses that in response to a trigger condition being satisfied, the UE performs autonomous cell change/UE controlled HO; if the condition is not satisfied the UE performs network-controlled cell change. The determination whether the trigger condition is satisfied may be performed by the UE locally or by the BTS, which in turn sends a message to the UE allowing or instructing the UE to perform autonomous HO. The conditions may be related to the DRX period, the HO command delay, the quality level of serving cell, quality offset between the serving and the target cell, history or connection type. In other instances and particularly in an enhanced Universal Mobile Telecommunications System terrestrial radio access network (E-UTRAN) network, a discontinuous reception (DRX) configuration in connected mode may not be properly set and therefore the DRX configuration does not e.g. allow for a mobile terminal's power consumption to be minimized. In such situations, the mobile terminal may rely on a network capability to determine a suitable DRX configuration and then maintain it under varying circumstances. However relying on the network may lead to non-optimal operation and, as a result, the mobile terminal may suffer from excessive power drain with non-ideal network implementation leading to low UE operation times and thereby degraded user experience, for example.

### BRIEF SUMMARY

A method, apparatus, system and computer program product are therefore provided according to independent claims 1, 6, 11 and 14 to enable a mobile terminal to perform semi-autonomous mobility while the mobile terminal is in a semi-idle state.

### BRIEF DESCRIPTION OF THE DRAWINGS

Having thus described embodiments of the invention in general terms, reference will now be made to the accompanying drawings, which are not necessarily drawn to scale, and wherein:
Figure 1 is a schematic representation of an example system having a mobile terminal that may to perform autonomous mobility;
Figure 2 is a block diagram of an example apparatus that may be embodied by a mobile terminal in accordance with one embodiment of the present invention;
Figures 3 and 4 are flow charts illustrating example autonomous handover operations performed in accordance with one embodiment of the present invention;
Figures 5 and 6 are flow charts illustrating example semi-idle state operations performed in accordance with an embodiment of the present invention; and
Figures 7 and 8 show example signaling flow diagrams performed in accordance with an embodiment of the present invention.

### DETAILED DESCRIPTION

Some example embodiments will now be described more fully hereinafter with reference to the accompanying drawings, in which some, but not all embodiments are shown. Indeed, the embodiments may take many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments, to refer to data capable of being transmitted, received, operated on, and/or stored. Moreover, the term "exemplary", as may be used herein, is not provided to convey any qualitative assessment, but instead merely to convey an illustration of an example. Thus, use of any such terms should not be taken to limit the scope of embodiments of the present invention.
As used herein, the term 'circuitry' refers to all of the following: (a) hardware-only circuit implementations (such as implementations in only analog and/or digital circuitry); (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present.
This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in a server, a cellular network device, or other network device.

In an embodiment, mobile terminal semi-autonomous mobility allows for handover or cell change without, for example, requiring handover signaling at a cell edge. In some example embodiments, one or more triggers may be configured to cause a mobile terminal to perform semi-autonomous mobility while in a connected state. These triggers may be based on current radio conditions e.g. reference signal received power (RSRP)/ reference signal received quality (RSRQ) type of measurements or RLF measurements and/or transmission behavior. Alternatively or additionally, transmission behavior that may also cause semi-autonomous mobility, includes but is not limited to time since last transmission, using and/or activating DRX (e.g. a mobile terminal is not in active transmission), specific cell properties (e.g. non-accessible closed subscriber group CSG cell) and/or specific source cell properties (e.g. pico cell). Semi-autonomous mobility may reduce interrupt time in a radio link failure situation and may enhance handover execution as signaling overhead is reduced, for example.

In one example embodiment, the mobile terminal may alternatively or additionally enter a semi-idle state (which may also be called as a semi-connected state) in an instance in which the mobile terminal is performing semi-autonomous mobility as described herein. However the semi-idle state may also be triggered in instances in which semi-autonomous mobility would not otherwise be implemented. The semi-idle state, for example, creates a new state that operates between idle and connected states, while still permitting mobility. This may enable a decrease in power consumption, for example.

In an embodiment and for example, the semi-idle state may also be advantageous within a single cell. For example, mobile terminal power consumption may be reduced especially in cases where the network has not given an appropriate connected mode DRX configuration that is applicable for infrequent data transfer and reception. The mobile terminal may effectively stay in a RRC connected state, e.g. the mobile terminal can be addressed with existing Cell Radio Network Temporary Identifier (C-RNTI). Alternatively, in an instance in which the duration of inactivity in the semi-idle state is long, the network may use also use a paging procedure for initiating a mobile terminal data transfer. In an example embodiment, the mobile terminal originated data transfer can use either normal service request (SR) assuming that the timing advance timer (TAT) has not expired and the transmission is possible from the physical layer point of view. Alternatively, for example, the mobile terminal may also initiate random access procedure to restart the active data transfer.

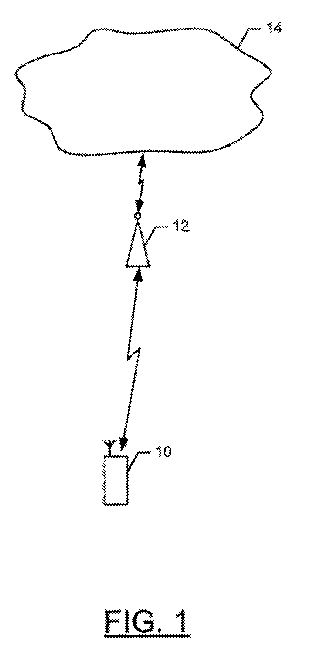

Although the method, apparatus and computer program product may be implemented in a variety of different systems, one example of such a system is shown in Figure 1, which includes a first communication device (*e.g*., mobile terminal 10) that is capable of communication via an access point 12, a base station, a CSG cell, a home Node B, a Node B, an evolved Node B (eNB) or other access point, with a network 14 (*e.g.,* a core network). While the network may be configured in accordance with Long Term Evolution (LTE) or LTE-Advanced (LTE-A), other networks may support the method, apparatus and computer program product of some embodiments of the present invention including those configured in accordance with wideband code division multiple access (W-CDMA), CDMA2000, global system for mobile communications (GSM), general packet radio service (GPRS) and/or the like.

The network 14 may include a collection of various different nodes, devices or functions that may be in communication with each other via corresponding wired and/or wireless interfaces. For example, the network may include one or more cells, including access point 12, which may serve a respective coverage area. The access point 12 could be, for example, part of one or more cellular or mobile networks or PLMNs. In turn, other devices such as processing devices (*e.g*., personal computers, server computers or the like may be coupled to the mobile terminal 10 and/or other communication devices via the network.

A communication device, such as the mobile terminal 10 (also known as user equipment (UE)), may be in communication with other communication devices or other devices via the access point 12 and, in turn, the network 14. In some cases, the communication device may include an antenna for transmitting signals to and for receiving signals from an access point.

When referred to herein, serving cell includes, but is not limited to a primary serving cell (PCell) and other serving cells such as secondary serving cells (SCell) that may be operating on an access point, such as access point 12. A candidate cell, target cell, neighbor cell and/or the like may also be used herein, and that includes a cell that is not currently a serving cell, but may become a serving cell in the future. A PCell, which may be embodied by an access point, generally includes, but is not limited to, a cell that is configured to perform initial establishment procedures, security procedures, system information (SI) acquisition and change monitoring procedures on the broadcast channel (BCCH) or data channel (PDCCH), and paging. The SCell, which may be embodied by a remote radio head (RRH) and is configured to provide additional radio resources to the PCell.

In some example embodiments, the mobile terminal 10 may be a mobile communication device such as, for example, a mobile telephone, portable digital assistant (PDA), pager, laptop computer, or any of numerous other hand held or portable communication devices, computation devices, content generation devices, content consumption devices, or combinations thereof. As such, the mobile terminal 10 may include one or more processors that may define processing circuitry either alone or in combination with one or more memories. The processing circuitry may utilize instructions stored in the memory to cause the mobile terminal 10 to operate in a particular way or execute specific functionality when the instructions are executed by the one or more processors. The mobile terminal 10 may also include communication circuitry and corresponding hardware/software to enable communication with other devices and/or the network 14.

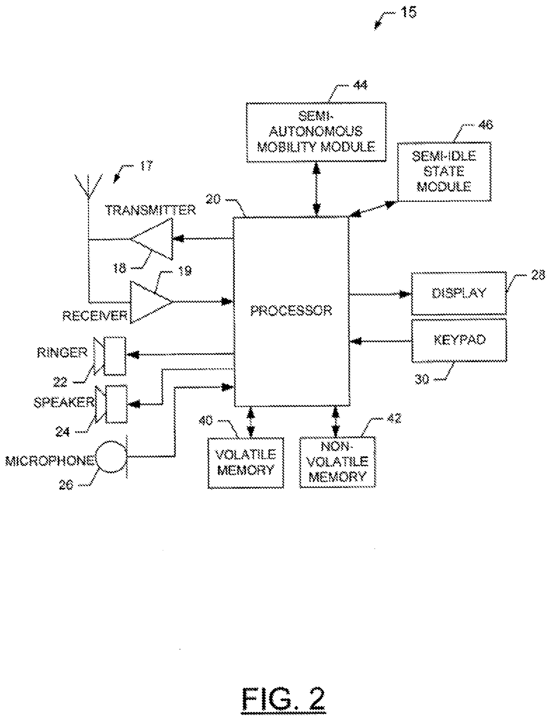

In one embodiment, for example, the mobile terminal 10 may be embodied as or otherwise include an apparatus 15 as generically represented by the block diagram of Figure 2. While the apparatus 15 may be employed, for example, by a mobile terminal 10 or an access point 12, it should be noted that the components, devices or elements described below may not be mandatory and thus some may be omitted in certain embodiments. Additionally, some embodiments may include further or different components, devices or elements beyond those shown and described herein.

In this regard, FIG. 2 illustrates an example block diagram of an apparatus 15. While several embodiments of a mobile terminal or access point (*e.g*., apparatus 15) are illustrated and will be hereinafter described for purposes of example, other types of user terminals, such as mobile telephones, mobile computers, portable digital assistants (PDAs), pagers, laptop computers, desktop computers, gaming devices, televisions, and other types of electronic systems, may employ some embodiments of the present invention.

As shown, the apparatus 15 may include an antenna 17 (or multiple antennas 17) in communication with a transmitter 18 and a receiver 19. The apparatus 15 may also include a processor 20 configured to provide signals to and receive signals from the transmitter and receiver, respectively. The processor 20 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 2 as a single processor, in some embodiments the processor 20 comprises a plurality of processors. These signals sent and received by the processor 20 may include signaling information in accordance with an air interface standard of an applicable cellular system, and/or any number of different wireline or wireless networking techniques, comprising but not limited to Wireless-Fidelity (Wi-Fi), wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the apparatus 15 may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (*e.g*., session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols and/or the like as well as similar wireless communication protocols that may be developed in the future.

Some Narrow-band Advanced Mobile Phone System (NAMPS), as well as Total Access Communication System (TACS), mobile terminals may also benefit from some embodiments of this invention, as should dual or higher mode phones (*e.g*., digital/analog or TDMA/CDMA/analog phones). Additionally, the apparatus 15 may be capable of operating according to Wireless Fidelity (Wi-Fi) or Worldwide Interoperability for Microwave Access (WiMAX) protocols.

It is understood that the processor 20 may comprise circuitry for implementing audio/video and logic functions of the apparatus 15. For example, the processor 20 may comprise a digital signal processor device, a microprocessor device, an analog-to-digital converter, a digital-to-analog converter, and/or the like. Control and signal processing functions of the apparatus 15 may be allocated between these devices according to their respective capabilities. Further, the processor may comprise functionality to operate one or more software programs, which may be stored in memory. For example, the processor 20 may be capable of operating a connectivity program, such as a web browser. The connectivity program may allow the apparatus 15 to transmit and receive web content, such as location-based content, according to a protocol, such as Wireless Application Protocol (WAP), hypertext transfer protocol (HTTP), and/or the like. The apparatus 15 may be capable of using a Transmission Control Protocol/Internet Protocol (TCP/IP) to transmit and receive web content across the internet or other networks.

The apparatus 15 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions (*e.g*., software and/or firmware) stored on a memory accessible to the processor 20 (*e.g.,* volatile memory 40, non-volatile memory 42, and/or the like). Although not shown, the mobile terminal may comprise a battery for powering various circuits related to the mobile terminal, for example, a circuit to provide mechanical vibration as a detectable output. The user input interface may comprise devices allowing the mobile terminal to receive data, such as a keypad 30, a touch display (not shown), a joystick (not shown), and/or other input device. In some embodiments including a keypad, the keypad may comprise numeric (0-9) and related keys (#, *), and/or other keys for operating the mobile terminal.

The apparatus 15 may comprise memory, such as a smart cart, subscriber identity module or subscriber identification module (SIM), a removable user identity module (R-UIM), and/or the like, which may store information elements related to a mobile subscriber. In addition to the SIM, the mobile terminal may comprise other removable and/or fixed memory. The apparatus 15 may include other non-transitory memory, such as at least one of a volatile memory 40 and/or at least one of a non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices (*e.g*., hard disks, floppy disk drives, magnetic tape, etc.), optical disc drives and/or media, non-volatile random access memory (NVRAM), and/or the like. Like volatile memory 40 non-volatile memory 42 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the apparatus 15.

A semi-autonomous mobility module 44 and a semi-idle state module 46 may be embodied as various means, such as circuitry, hardware, a computer program product comprising computer readable program instructions stored on a computer readable medium (*e.g*., the memory 40) and executed by a processing device (*e.g.,* the processor 20), or some combination thereof and, in one embodiment, is embodied as or otherwise controlled by the processor 20. In an embodiment, wherein the semi-autonomous mobility module 44 and a semi-idle state module 46 are embodied separately from the processor 20, the semi-autonomous mobility module 44 and the semi-idle state module 46 may be in communication with the processor 20. The semi-autonomous mobility module 44 and the semi-idle state module 46 may further be in communication with one or more of the memory 40 and/or 42, the transmitter 18, and the receiver 19, such as via a bus.

In some embodiments, the semi-autonomous mobility module 44 may be configured to provide instructions that enable a mobile terminal, such as the mobile terminal 10, to perform semi-autonomous mobility without a handover command. Semi-autonomous handover or cell change may be conducted based on predetermined rules, triggers, and/or threshold events. In an example embodiment, the predetermined threshold events that may enable and/or trigger semi-autonomous mobility, include a neighbor cell (e.g. candidate, target and/or or new cell) having improved radio conditions with regard to a current serving cell. Other such examples may include an activity level of the mobile terminal and/or a connection state of the mobile terminal. Alternatively or additionally, RLF evaluation phases and/or accessible closed subscriber group (CSG) cells with sufficient quality. Semi-autonomous mobility may also be performed without a handover command or with a preconfigured handover command such as those preconfigured handover commands described in pending Patent Cooperation Treaty application entitled METHODS, APPARATUSES AND COMPUTER PROGRAM PRODUCTS FOR PROVIDING AN OPTIMIZED HANDOVER PREPARATION AND EXECUTION OPERATION filed on June 21, 2011 by applicant Nokia Corporation.

In some embodiments, semi-autonomous mobility may also be enabled before a timer, such as a T311 timer, has expired, based on a combination of RLF evaluation and radio conditions (e.g. such as if a candidate cell absolute or relative signal quality meet a predefined criteria), based on L1 problems and/or when a timer, such as timer T310, starts and/or expires. Other conditions that may enable semi-autonomous mobility include, but are not limited to, an instance in which a large amount of data is to be transmitted and/or received. In some embodiments, semi-autonomous mobility instructions may be provided to the mobile terminal such as by the access point 12 and may include a measurement reporting event and/or a handover indication that includes instructions for the mobile terminal to perform a future handover without explicit handover signaling from the access point 12.
In one example embodiment, a semi-autonomous mobility module 44 may be configured to cause semi-autonomous signaling to be performed by causing a measurement report to be transmitted to a serving cell prior to a cell change. In some embodiments, the semi-autonomous module 44 may cause a cell change to be performed and may also cause an indication of the mobile terminals presence to be transmitted to a new target cell. Alternatively or additionally, in an instance in which a mobile terminal transmits a measurement report to a serving cell prior to cell change, the semi-autonomous mobility module 44 may cause the report to be transmitted and then may or may not wait for a reply prior to causing a handover to be conducted. In instances in which the semi-autonomous mobility module 44 is configured to wait for a reply before changing cells, a threshold for a signal level or a time period may be set, that in an instance in which it expires, the semi-autonomous mobility module 44 may cause a handover without waiting for a reply.
In an embodiment, the semi-idle state module 46 may be configured to cause a mobile terminal, such as mobile terminal 10, to transition to a semi-idle state in an instance in which certain conditions are fulfilled, such as those conditions described herein that cause semi-autonomous mobility. Alternatively or additionally other conditions may cause a semi-idle state such as an instance in which a semi-idle state module 46 receives, for example via the receiver 19, instructions to transition to a semi-idle state, and/or when there is not any current data be transmitted and/or received, and/or instances in which a semi-idle state may provide a decrease in power consumption.
In other embodiment, the semi-idle state module 46 may cause the semi-idle state to be enabled in certain geographical areas, such as a mobile terminal user's home or business, or other locations where there may be typical periods of inactivity or lack of movement. In some embodiments, other triggers may be used to cause the semi-idle state module 46 to cause a transition to a semi-idle state, these triggers include but are not limited to, lack of a DRX configuration without active data transmissions, lack of a sufficient DRX configuration, after a period defined by a timer, lack of uplink and/or downlink data transmissions or receptions (or after a time period of such), expiration of a timing advance timer and/or other triggers based on user actions. The semi-idle state and the referenced triggers may also apply to or may be restricted to specific cells, for example CSG cells.

The semi-idle state module 46 may also be configured to cause a mobile terminal context and/or a scheduling identity, such as C-RNTI, to be stored in the volatile memory 40 and/or the non-volatile memory 42. The mobile terminal context and/or a scheduling identity, such as C-RNTI, may also be stored in one or more access points and/or the network.

The semi-idle state module 46 may be further configured to cause a downlink data transfer to be started and/or restarted with a connected state Physical Downlink Control Channel (PDCCH) order and/or by scheduling using PDCCH and a scheduling identity, such as C-RNTI. Alternatively or additionally, a paging channel may also be used to restart downlink data transfer. In an instance in which downlink was restarted and/or was scheduled, the mobile terminal may transition to a connected state.

In an embodiment, uplink data transfer may be caused to be started and/or restarted by the semi-idle state module 46 while the mobile terminal is in a semi-idle state using an RRC re-establishment procedure. An RRC re-establishment procedure may be used because the context is stored both by the mobile terminal and an access point. Alternatively or additionally, uplink can be started and/or restarted with random access procedures followed by uplink transmission with a scheduling identity, such as C-RNTI. In an instance in which uplink was initiated, the mobile terminal may transition to a connected state.

In an embodiment, the semi-idle state module 46 may be configured to cause the mobile terminal, such as mobile terminal 10, to transition to a semi-idle state. While in a semi-idle state, the semi-idle state module 46 may cause a cell change indication to be transmitted to a new cell and/or or an access point in an instance in which the mobile terminal moves/changes to another cell. In some embodiments, a RRC re-establishment procedure may be used to indicate a change of a cell. Alternatively or additionally, the semi-idle state module 46 may cause a cell update to be performed, for example by sending data such as C-RNTI, a CELL-UPDATE and/or the like when a cell has changed.

In an embodiment and in an instance in which a mobile terminal is connected to a specific cell (e.g., CSG Cell), the semi-idle state module 46 may be configured to cause a semi-idle state to be triggered. When the mobile terminal is connected to a specific cell (e.g., CSG Cell), mobility support may not be required; however outbound reselection and/or handover may be based on a connected and/or idle mode behavior.

In an embodiment, a semi-idle state may also be used during mobile terminal mobility. In an instance in which the semi-idle state is used for mobility, the semi-idle state may function in a similar manner to connected mode mobility, an idle mode reselection combined with measurement reporting, idle mode mobility with reselection and/or the like. In an instance in which idle mode reselection rules were to be combined with measurement reporting in a source cell, then the semi-idle state module 46 may be configured to evaluate cell reselection according to predetermined rules, such as those rules described with reference to semi-autonomous mobility or idle mode mobility rules. In these instances, and after a reselection is made, the semi-idle state module 46 may be configured to cause measurement reporting to be initiated.

In an instance in which idle type mobility with reselection is chosen, then the semi-idle state module 46 may cause a message to be transmitted, such as by the transmitter 18, wherein the message may indicate a handover and/or cell change to a new cell. Alternatively or additionally, the semi-idle state module 46 may be configured to cause a selection of a new cell without informing the previous serving cell. In this case the semi-idle state module 46 may cause a cell update and/or may cause a connection reestablishment procedure to be transmitted to alert the new cell of the reselection.

In some embodiments, a cell update or connection reestablishment procedure may be configured to include an indication of the current mobile terminal state. Alternatively or additionally the semi-idle state module 46 may also cause the new or target cell to be provided with identification for a source serving cell. The semi-idle state module 46 may also cause a scheduling identity, such as C-RNTI, which is configured to provide connection information to the source cell, to be provided to the new or target cell. In an instance in which the semi-idle state module 46 does not cause notification of movement to a different cell to be provided, a transmission area wide page may be received that is configured to locate the mobile terminal.

In an embodiment, in order to establish a connection, the semi-idle state module 46, while in a semi-idle state, may be configured to cause random access channel (RACH) and RRC connection reestablishment procedures to be utilized. Alternatively or additionally, using random access procedures followed by uplink transmission with a scheduling identity, such as C-RNTI, may be used to establish and/or restart a connection.

Referring now to Figure 1, in an embodiment, a network, such as network 14 and/or an access point, such as access point 12 may be configured to communicate with a mobile terminal using a scheduling identity, such as C-RNTI. In such instances, the mobile terminal 10 may be configured to monitor, such as by means such as the semi-idle state module 46, the receiver 19, the processor 20 and/or the like, a scheduling identity, such as C-RNTI, so as to determine when the network and/or the access point is attempting to reach it. By monitoring a scheduling identity, such as C-RNTI, the mobile terminal may receive a PDCCH order that may cause the mobile terminal to start a RACH procedure.

Alternatively or additionally, a semi-idle state may be network controlled. For example, the mobile terminal 10 may be configured with measurement events, and in an instance in which a measurement event is triggered, the mobile terminal 10 may be configured to send a measurement report to an access point, such as access point 12. In response the access point 12 may command handover. In some embodiments the measurement event may be triggered without causing a measurement report to be sent.

In some embodiments, the measurement report may be triggered by cell reselection rules. Alternatively or additionally, a new cell may then be configured to obtain the mobile terminal context from a source cell, such as by a transmission request or the new cell and the source cell may share an access point.

Alternatively or additionally, a context fetch may be used to transfer a mobile terminal context to a new cell in instances in which a mobile terminal is accessing a new cell within the same access point as the source serving cell. This context fetch may also be limited to a smaller or larger set of cells. In such instances, a list of physical cell identifications (PCIs) in which the procedure may work may be provided so as to reduce those instances in which a mobile terminal would need to signal. Such an indication may take the form of a list of cells or each cell could be broadcast an access point ID which would indicate if a cell is in a same access point than the one where state was changed to semi-idle.

A PDCCH, PDCCH Order (C-RNTI), and/or paging may be used by an access point 12 or the network 14 to communicate with the mobile terminal (e.g., without using paging throughout the paging area). Alternatively or additionally the mobile terminal may be addressed based on paging occasions that are based on a PDCCH order. As is described herein, a mobile terminals context may include mobile terminal radio and security capabilities, handover restrictions, trace activations, state, security context, transport parameters and/or the like. The context for the mobile terminal may be stored by an access point, such as access point 12.

In an embodiment, camping by a mobile terminal 10 may be prioritized by an access point 12 or the network 14 on a carrier cell on which the connected release was indicated, such as when the mobile terminal transitioned from a connected state to a semi-idle state. In such embodiments, the mobile terminal, such as mobile terminal 10, may receive an indication that indicates those cells that enable camping so as to ensure such a cell is selected. Alternatively or additionally, the mobile terminal 10 may select the best cell as the serving cell. Alternatively or additionally, there may be differences between handovers (such as an X1 interface or S1 handover) but the operation from the mobile terminal will be the same in all cases, for example the mobile terminal 10 may determine an instance in which the HO requires a particular signaling. The proposed mobility in the semi-idle state may also be restricted to X2 interface depending on the network implementation.

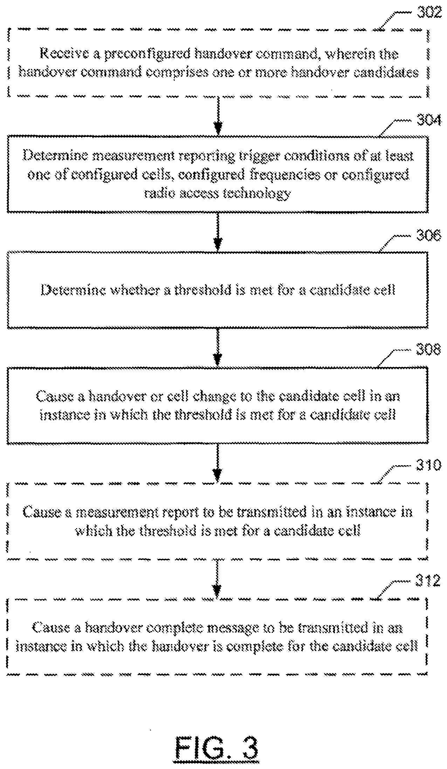

Figures 3-6 illustrate example flowcharts of the example operations performed by a method, apparatus and computer program product in accordance with one embodiment of the present invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 40, 42 of an apparatus employing an embodiment of the present invention and executed by a processor 20 in the apparatus. As will be appreciated, any such computer program instructions may be loaded onto a computer or other programmable apparatus (*e.g*., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of Figures 3-6, when executed, convert a computer or processing circuitry into a particular machine configured to perform an example embodiment of the present invention. Accordingly, the operations of Figures 3-6 define an algorithm for configuring a computer or processing to perform an example embodiment. In some cases, a general purpose computer may be provided with an instance of the processor which performs the algorithms of Figures 3-6 to transform the general purpose computer into a particular machine configured to perform an example embodiment.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations herein may be modified or further amplified as described below. Moreover, in some embodiments additional optional operations may also be included. It should be appreciated that each of the modifications, optional additions or amplifications below may be included with the operations above either alone or in combination with any others among the features described herein.

Figure 3 is an example flowchart illustrating a mobile terminal semi-autonomous mobility performed in accordance with an embodiment of the present invention. As shown in operation 302, the apparatus 15 embodied, for example, by a mobile terminal 10, may include means, such as the transmitter 18, the receiver 19, the processor 20, the semi-autonomous mobility module 44, or the like, for receiving a preconfigured handover command, wherein the handover command comprises one or more handover candidates. In some embodiments, a preconfigured handover command is not necessary for semi-autonomous mobility and a mobile terminal, such as mobile terminal 10, may be configured to determine its own candidate cells.

As shown in operation 304, the apparatus 15 embodied, for example, by a mobile terminal 10, may include means, such as the processor 20, the semi-autonomous mobility module 44, and/or the like for determining measurement reporting trigger conditions of at least one of the configured cells, configured frequencies and/or a configured radio access technology (RAT). For example, the mobile terminal may be configured to perform measurements and then evaluate whether the measurement reporting conditions are met. These conditions may be predetermined or may be dynamically altered based on received messages from an access point and/or the network.

The mobile terminal may be configured to measure neighbor cells which are on a different frequency, and/or which use different RAT. For example, the criteria that may trigger the mobility for inter-frequency or inter-RAT cells can be similar to those for intra-frequency cells. Pre-determined thresholds may also be given to the signal levels or signal quality to the serving cell and neighbor cell radio measurement results which may provide the criteria to initiate the handover to the new cell. In some embodiments, the handover trigger can be for example, an event where single threshold is exceeded, the serving cell signal level or quality is lower than threshold, and/or there can be multiple thresholds that determine the handover criteria. For example, the serving cell signal level or quality may be lower than a first threshold while the neighbor cell signal level or quality is higher than a second threshold.

In an embodiment, the network, such as the network 14, may be configured to provide a corresponding measurement reporting event for the candidate cells, such as when a predefined threshold is met, the event is triggered and handover is performed without a new handover command after the measurement report. Alternatively or additionally the measurement reporting event may also be based on other factors, such as a time a mobile terminal has been inactive.

As shown in operation 306, the apparatus 15 embodied, for example, by a mobile terminal 10, may include means, such as the processor 20, the semi-autonomous mobility module 44, and /or the like, for determining whether a threshold is met. The threshold may include certain radio conditions that are fulfilled, interference conditions and/or the like. As shown in operation 308, the apparatus 15 embodied, for example, by a mobile terminal 10, may include means, such as the processor 20, the semi-autonomous mobility module 44, and /or the like, for causing a handover or cell change to the candidate cell. As shown in operation 310, the apparatus 15 embodied, for example, by a mobile terminal 10 that may include means, such as the transmitter 18, the processor 20, the semi-autonomous mobility module 44, and/or the like for causing a measurement report to be transmitted in an instance in which the threshold is met for a candidate cell. In an embodiment, the measurement report indicates that a threshold, as described with reference to operation 304, has been met for a specific cell. The transmitted measurement report may act as an indication to the network, such as the network 14, that the mobile terminal is going to move (e.g. reselect) and/or perform handover/cell change to another cell. Alternatively or additionally, a mobile terminal, such as mobile terminal 10, may perform handover or cell change without notification to the network using a measurement report.

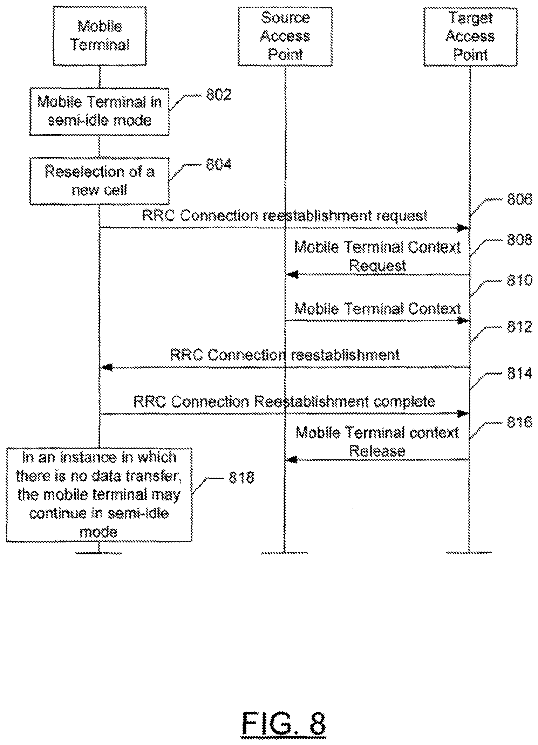

As shown in operation 312, the apparatus 15 embodied, for example, by a mobile terminal 10, may include means, such as the transmitter 18, the processor 20, the semi-autonomous mobility module 44, and/or the like for causing a handover complete message to be transmitted in an instance in which the handover is complete for a candidate cell. At the completion of the handover to a candidate cell, the mobile terminal, may transmit, such as via the transmitter 18, the processor 20 and/or the like, a handover complete message on the candidate cell notifying the network of the handover or cell change. In some embodiments, an RRC connection re-establishment message may be transmitted and/or a random access procedure may be followed by an uplink transmission with C-RNTI. Both of which may act to provide notification of the handover. RRC establishment procedures are further shown in the example signaling diagram shown with reference to Figure 8.

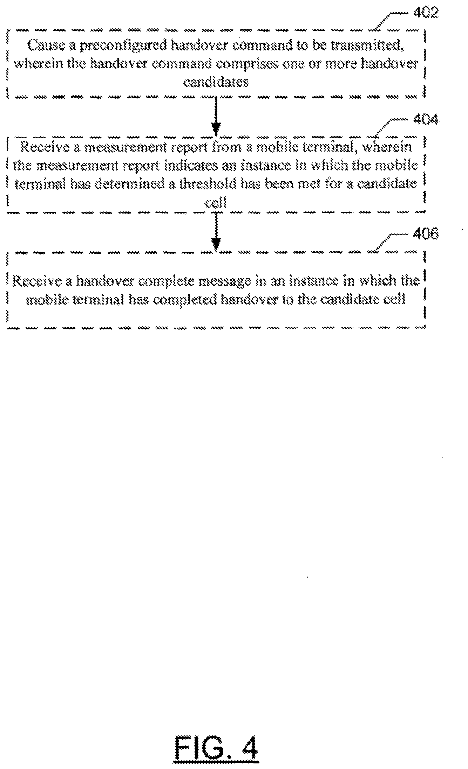

Figure 4 is an example flowchart illustrating mobile terminal semi-autonomous mobility with respect to an access point performed in accordance with an embodiment of the present invention. As shown in operation 402, the apparatus 15 embodied, for example, by an access point 12, may include means, such as the transmitter 18, the processor 20, the semi-autonomous mobility module 44, and/or the like for causing a preconfigured handover command to be transmitted, wherein the handover command comprises one or more handover candidates. As shown in operation 404, the apparatus 15 embodied, for example, by an access point 12, may include means, such as the receiver 19, the processor 20, the semi-autonomous mobility module 44, and/or the like for receiving a measurement report from a mobile terminal, wherein the measurement report indicates an instance in which the mobile terminal has determined a threshold has been met for a candidate cell. As shown in operation 406, the apparatus 15 embodied, for example, by an access point 12, may include means, such as the receiver 19, the processor 20, the semi-autonomous mobility module 44, and/or the like for receiving a handover complete message in an instance in which the mobile terminal has completed handover to the candidate cell. For example and in an instance in which the messages of operations 404 and/or 406 are not received, the mobile terminal may be configured to access a next cell, such as the next candidate cell, as indicated by the one or more handover candidates.

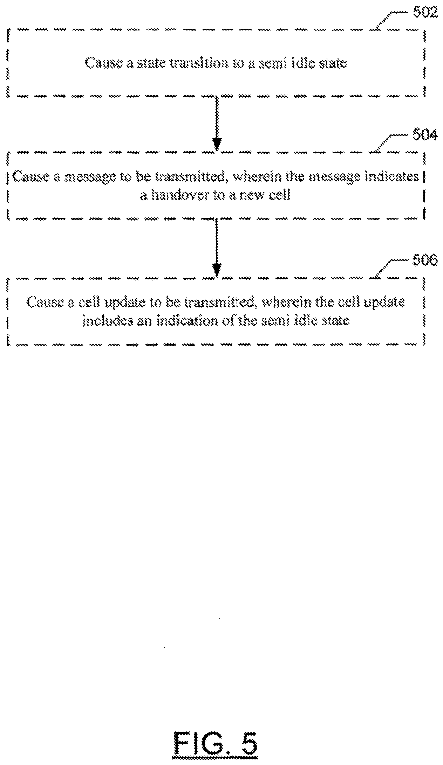

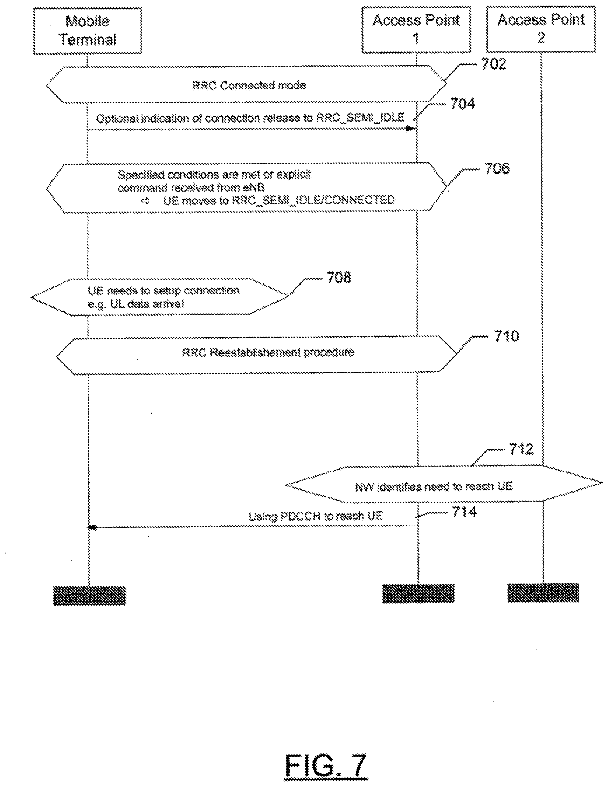

Figure 5 illustrates a flow diagram that illustrates the connection, network notification and mobility of a mobile terminal in a semi-idle state, according to an embodiment of the current invention. As shown in operation 502, the apparatus 15 embodied, for example, by a mobile terminal 10, may include means, such as the processor 20, the semi-idle state module 46 and/or the like for causing a transition to a semi-idle state. The mobile terminal, such as mobile terminal 10, may be configured to transition to a defined semi-idle mode where the mobile terminal may maintain an RRC connection, but reduces or eliminates normal connection mode activity. A signal flow diagram illustrating a transition to a semi-idle state is shown with reference to Figure 7.

The apparatus 15 embodied, for example, by a mobile terminal 10, may include means, such as the processor 20, the semi-idle state module 46 and/or the like for triggering a transition to a semi-idle state. The mobile terminal, such as mobile terminal 10, may be configured to cause a notification to be transmitted indicating a transition to a semi-idle state in order to enable an access point and/or the network to store the mobile terminal context and also to enable efficient scheduling. The transition to semi-idle may be conducted without indication from an access point, such as access point 12 and may occur based on a trigger. An example trigger may include a timer between the radio access network (RAN) and the mobile terminal.

Alternatively or additionally, the transition to semi-idle may be caused by an indication received from an access point, such as access point 12. Other triggers may include last time of uplink and/or downlink transmission, medium access control (MAC) control element and/or the like.

Alternatively or additionally, an instruction may also be received that indicates that the mobile terminal should transition to a semi-idle state. In some embodiments a trigger may include a combination of an indication and for example a timer. In an embodiment and as described with reference to Figure 3, the mobile terminal may also transition to a semi-idle state autonomously, based on the semi-autonomous mobility. For example, the autonomous transition may be determined by the network through an access point after a number of non-responses for PDCCH.

As shown in operation 504, the apparatus 15 embodied, for example, by a mobile terminal 10, may include means, such as the transmitter 18, the receiver 19, the processor 20, the semi-idle state module 46 and/or the like for causing a message to be transmitted wherein the message indicates a handover to a new cell. As shown in operation 506, the apparatus 15 embodied, for example, by a mobile terminal 10, may include means, such as the transmitter 18, the receiver 19, the processor 20, the semi-idle state module 46 and/or the like for causing a cell update to be transmitted, wherein the cell update includes an indication of semi-idle state. For example, a cell update or similar message may indicate to a serving cell that a mobile terminal is in the semi-idle state as is described herein.

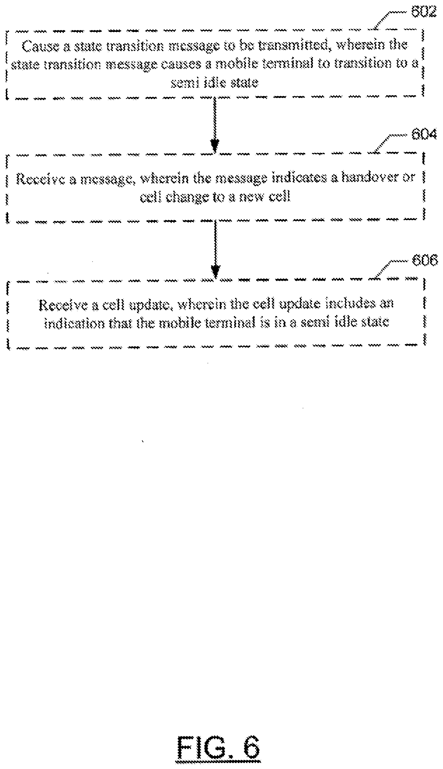

Figure 6 is an example flow diagram that illustrates example behavior of an example access point according to an embodiment of the current invention. As shown in operation 602, the apparatus 15 embodied, for example, by an access point 12, may include means, such as the transmitter 18, the processor 20, the semi-autonomous mobility module 44, and/or the like for causing a state transition message to be transmitted, wherein the state transition message causes a mobile terminal to transition to a semi idle state. As shown in operation 604, the apparatus 15 embodied, for example, by an access point 12, may include means, such as the receiver 19, the processor 20, the semi-autonomous mobility module 44, and/or the like for receiving a message, wherein the message indicates a handover or cell change to a new cell. As shown in operation 606, the apparatus 15 embodied, for example, by an access point 12, may include means, such as the receiver 19, the processor 20, the semi-autonomous mobility module 44, and/or the like for receiving a cell update, wherein the cell update includes an indication that the mobile terminal is in a semi idle state.

Figure 7 is an example signal flow diagram illustrating an example transition by a mobile terminal to a semi-idle state. As is shown with reference to block 702, the mobile terminal may be in a connected mode and may optionally indicate a connection release to a semi idle state as is shown with reference to signal 704. As shown in block 706 and in an instance in which specified conditions are met and/or an explicit command is received from an access point, the mobile terminal may transition to a semi-idle state. In block 708 and in an instance in which a mobile terminal needs to setup a connection, such as because of the arrival of uplink data, the mobile terminal may cause an RRC reestablishment procedure to be triggered in order to connect to access point 1, as is shown in block 710. In block 712, the network may attempt to reach a mobile terminal, and in response a channel, such as a PDCCH, may be used to communicate with and/or identify the mobile terminal as is shown in signal 714.

Figure 8 is an example signal flow diagram illustrating example RRC establishment procedures. As is shown with reference to block 802, a mobile terminal may be in a semi-idle state (or mode) and then as shown in block 804, the mobile terminal may attempt reselection of a new cell. The mobile terminal may also be configured to transmit an RRC connection reestablishment request to a target access point as shown in signal 806. In response, in signal 808, the target access point may request a mobile terminal context from the source access point. The source access point may then transmit the mobile terminal context in signal 810, in response to the request. After the mobile terminal context is transferred to the target access point, the target access point may indicate RRC connection reestablishment to the mobile terminal in signal 812. The mobile terminal may then signal the target access point that an RRC connection reestablishment is complete in signal 814, and the target access point may then indicate to the source access point in signal 816 to release the mobile terminal context. Finally, at block 818, in an instance in where there is no active data transfer the mobile terminal may remain in a semi idle mode.

For example, the semi-idle state as described herein may provide for reduced power consumption and faster connection setup times. Additionally such a state may be beneficial in instances in which a mobile terminal is active, but not moving and/or in an instance in which a mobile terminal has irregular transmissions and/or the mobile terminal is a machine to machine (M2M), machine type communication a (MTC) device and/or the like). A semi-idle state may also be advantageous in a heterogeneous network. Finally, generally a signaling load may be decreased when in a semi-idle state.

In an embodiment, a method includes determining measurement reporting trigger conditions of at least one of configured cells, configured frequencies or configured RAT. A method also includes determining whether a threshold is met for a candidate cell. The method also includes causing a handover to the candidate cell.

In another embodiment, an apparatus comprising a processor and a memory including software, the memory and the software configured to, with the processor, cause the apparatus at least to determine measurement reporting trigger conditions of at least one of configured cells or any cell, configured frequencies or configured RAT. The apparatus is further caused to determine whether a threshold is met for a candidate cell. The apparatus is further caused to cause a handover to the candidate cell in an instance in which the threshold is met.

In a further embodiment, a computer program product comprising at least one computer readable non-transitory memory having program code stored thereon, the program code which when executed by an apparatus cause the apparatus at least to determine measurement reporting trigger conditions of at least one cell, such as a configured cell, configured frequencies or configured RAT. A computer program product also includes program code that is further configured to determine whether a threshold is met for a candidate cell. A computer program product also includes program code that is further configured to cause a handover to the candidate cell in an instance in which the threshold is met.

In yet another embodiment, an apparatus is provided that includes means for determining measurement reporting trigger conditions of at least one of configured cells, configured frequencies or configured RAT. An apparatus also includes means for determining whether a threshold is met for a candidate cell. An apparatus also includes means for causing a handover to the candidate cell in an instance in which the threshold is met.

In an embodiment, a method includes causing a state transition to a semi-idle state in an instance in which a predetermined threshold is met. A method also includes causing a message to be transmitted, wherein the message indicates a handover to a new cell. A method also includes causing a cell update message to be transmitted, wherein the cell update includes an indication of the semi-idle state.

In another embodiment, an apparatus comprising a processor and a memory including software, the memory and the software configured to, with the processor, cause the apparatus at least to cause the apparatus at least to cause a state transition to a semi-idle state in an instance in which a predetermined threshold is met. The apparatus is further caused to cause a message to be transmitted, wherein the message indicates a handover or cell change to a new cell. The apparatus is further caused to cause a cell update message to be transmitted, wherein the cell update includes an indication of the semi-idle state.

In a further embodiment, a computer program product comprising at least one computer readable non-transitory memory having program code stored thereon, the program code which when executed by an apparatus cause the apparatus at least to cause a state transition to a semi-idle state in an instance in which a predetermined threshold is met. A computer program product also includes program code that is further configured to cause a message to be transmitted, wherein the message indicates a handover to a new cell. A computer program product also includes program code that is further configured to cause a cell update message to be transmitted, wherein the cell update includes an indication of the semi-idle state.

In yet another embodiment, an apparatus is provided that includes means for causing a state transition to a semi-idle state in an instance in which a predetermined threshold is met. An apparatus further includes means for causing a message to be transmitted, wherein the message indicates a handover to a new cell. An apparatus further includes means for causing a cell update message to be transmitted, wherein the cell update includes an indication of the semi-idle state.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method performed by a mobile terminal comprising:
obtaining, from an access point, measurement reporting trigger conditions for neighboring cells which are on a different frequency and/or which use different radio access technology, RAT, defining that when a predefined threshold is met, an event is triggered;
measuring neighboring cells; and
determining whether the threshold has been met, and if so:
causing a state transition of the mobile terminal to a semi-idle state; and
causing a handover to a neighboring cell, without waiting for a handover command,
wherein the semi-idle state is a state in which the mobile terminal keeps the radio resource connection, RRC, with the access point and wherein the terminal context is stored.

2. A method according to Claim 1, further comprising:
the state transition to the semi-idle state to be caused in a further instance in which one or more predetermined conditions are fulfilled.

3. A method according to Claim 2, wherein uplink is configured to be restarted in the semi-idle state based on at least one of a radio resource control connection re-establishment message or an uplink transmission via a cell radio network temporary identifier.

4. A method according to any one of Claims 2 or 3, wherein downlink is configured to be restarted in the semi-idle state based on at least one of a physical downlink control channel order or via a paging channel.

5. A method according to any one of Claims 2 to 4, further comprising:
causing a message to be transmitted while in the semi-idle state, wherein the message indicates handover to the candidate cell.

6. An apparatus for a mobile terminal comprising:
at least one processor; and
at least one memory including computer program code, the at least one memory and the computer program code configured to, with the at least one processor, cause the apparatus to at least:
obtain, from an access point, measurement reporting trigger conditions for neighboring cells which are on a different frequency and/or which use different radio access technology, RAT, defining that when a predefined threshold is met, an event is triggered;
measure neighboring cells; and
determine whether the threshold has been met, and if so:
causing a state transition of the mobile terminal to a semi-idle state; and
causing a handover to a neighboring cell, without waiting for a handover command,
wherein the semi-idle state is a state in which the mobile terminal keeps the radio resource connection, RRC, with the access point and wherein the terminal context is stored.

7. An apparatus according to Claim 6, wherein the at least one memory including the computer program code is further configured to, with the at least one processor, cause the apparatus to:
cause the state transition to the semi-idle state in a further instance in which one or more predetermined conditions are fulfilled.

8. An apparatus according to Claim 7, wherein uplink is configured to be restarted in the semi-idle state based on at least one of a radio resource control connection re-establishment message or an uplink transmission via a cell radio network temporary identifier.

9. An apparatus according to any one of Claims 7 or 8, wherein downlink is configured to be restarted in the semi-idle state based on at least one of a physical downlink control channel order or via a paging channel.

10. An apparatus according to any one of Claims 7 to 9, wherein the at least one memory including the computer program code is further configured to, with the at least one processor, cause the apparatus to:
cause a message to be transmitted while in the semi-idle state, wherein the message indicates handover to the candidate cell.

11. A system comprising:
an apparatus as defined in any of claims 6 to 10; and
an access point comprising means for providing, to the apparatus,
measurement reporting trigger conditions for neighboring cells which are on a different frequency and/or which use different radio access technology, RAT, defining that when a predefined threshold is met, an event is triggered.

12. A system according to Claim 11, wherein the access point further comprises means for causing a state transmission message to be transmitted, wherein the state transmission message causes the mobile terminal to transition to the semi-idle state.

13. A system according to Claim 12, wherein the access point further comprises means for receiving a cell update, wherein the cell update includes an indication that the mobile terminal is in the semi-idle state.

14. A computer program configured to cause a method according to any one of claims 1-5 to be performed when said program is executed by a computer.

## Patentansprüche

1. Verfahren, das durch ein mobiles Endgerät durchgeführt wird und Folgendes umfasst:
Erhalten, von einem Zugangspunkt, von Messungsberichterstattungs-Auslösebedingungen für Nachbarzellen, welche sich auf einer unterschiedlichen Frequenz befinden und/oder welche eine unterschiedliche Funkzugangstechnologie, RAT (*Radio Access Technology*), verwenden, welche definieren, dass, wenn eine vordefinierte Schwelle erreicht wird, ein Ereignis ausgelöst wird;
Messen von Nachbarzellen; und
Bestimmen, ob die Schwelle erreicht wurde, und wenn dem so ist:
Veranlassen eines Zustandsübergangs des mobilen Endgerätes in einen Semi-Ruhezustand; und
Veranlassen einer Übergabe an eine Nachbarzelle, ohne auf einen Übergabebefehl zu warten,
wobei es sich bei dem Semi-Ruhezustand um einen Zustand handelt, in welchem das mobile Endgerät die Funkressourcenverbindung, RRC (*Radio Resource Connection*), mit dem Zugangspunkt aufrechterhält und wobei der Endgerätekontext gespeichert wird.

2. Verfahren nach Anspruch 1, welches ferner Folgendes umfasst:
Veranlassen des Zustandsübergangs in den Semi-Ruhezustand in einem weiteren Fall, in welchem eine oder mehrere vorbestimmte Bedingungen erfüllt sind.

3. Verfahren nach Anspruch 2, wobei der Uplink derart konfiguriert ist, dass er im Semi-Ruhezustand basierend auf einer Funkressourcensteuerung-Verbindungswiederherstellungsnachricht und/oder einer Uplink-Übertragung über einen temporären Zellenfunknetzwerk-Identifikator neu gestartet wird.

4. Verfahren nach einem der Ansprüche 2 oder 3, wobei der Downlink derart konfiguriert ist, dass er im Semi-Ruhezustand basierend auf einer physischen Downlink-Steuerkanalreihenfolge und/oder über einen Paging-Kanal neu gestartet wird.

5. Verfahren nach einem der Ansprüche 2 bis 4, welches ferner Folgendes umfasst:
Veranlassen des Übertragens einer Nachricht im Semi-Ruhezustand, wobei die Nachricht eine Übergabe an die Kandidatenzelle angibt.

6. Vorrichtung für ein mobiles Endgerät, welche Folgendes umfasst:
mindestens einen Prozessor; und
mindestens einen Speicher, der Computerprogrammcode beinhaltet, wobei der mindestens eine Speicher und der Computerprogrammcode, mit dem mindestens einen Prozessor, zum Veranlassen der Vorrichtung zu mindestens Folgendem konfiguriert sind:
Erhalten, von einem Zugangspunkt, von Messungsberichterstattungs-Auslösebedingungen für Nachbarzellen, welche sich auf einer unterschiedlichen Frequenz befinden und/oder welche eine unterschiedliche Funkzugangstechnologie, RAT, verwenden, welche definieren, dass, wenn eine vordefinierte Schwelle erreicht wird, ein Ereignis ausgelöst wird;
Messen von Nachbarzellen; und
Bestimmen, ob die Schwelle erreicht wurde, und wenn dem so ist:
Veranlassen eines Zustandsübergangs des mobilen Endgerätes in einen Semi-Ruhezustand; und
Veranlassen einer Übergabe an eine Nachbarzelle, ohne auf einen Übergabebefehl zu warten,
wobei es sich bei dem Semi-Ruhezustand um einen Zustand handelt, in welchem das mobile Endgerät die Funkressourcenverbindung, RRC, mit dem Zugangspunkt aufrechterhält und wobei der Endgerätekontext gespeichert wird.

7. Vorrichtung nach Anspruch 6, wobei der mindestens eine Speicher, der den Computerprogrammcode beinhaltet, ferner, mit dem mindestens einen Prozessor, zum Veranlassen der Vorrichtung zu Folgendem konfiguriert ist:
Veranlassen des Zustandsübergangs in den Semi-Ruhezustand in einem weiteren Fall, in welchem eine oder mehrere vorbestimmte Bedingungen erfüllt sind.

8. Vorrichtung nach Anspruch 7, wobei der Uplink derart konfiguriert ist, dass er im Semi-Ruhezustand basierend auf einer Funkressourcensteuerung-Verbindungswiederherstellungsnachricht und/oder einer Uplink-Übertragung über einen temporären Zellenfunknetzwerk-Identifikator neu gestartet wird.

9. Vorrichtung nach einem der Ansprüche 7 oder 8, wobei der Downlink derart konfiguriert ist, dass er im Semi-Ruhezustand basierend auf einer physischen Downlink-Steuerkanalreihenfolge und/oder über einen Paging-Kanal neu gestartet wird.

10. Vorrichtung nach einem der Ansprüche 7 bis 9, wobei der mindestens eine Speicher, der den Computerprogrammcode beinhaltet, ferner, mit dem mindestens einen Prozessor, zum Veranlassen der Vorrichtung zu Folgendem konfiguriert ist:
Veranlassen des Übertragens einer Nachricht im Semi-Ruhezustand, wobei die Nachricht eine Übergabe an die Kandidatenzelle angibt.

11. System, welches Folgendes umfasst:
eine Vorrichtung, wie in einem der Ansprüche 6 bis 10 definiert; und
einen Zugangspunkt, der Mittel zum Bereitstellen des Folgenden an die Vorrichtung umfasst:
Messungsberichterstattungs-Auslösebedingungen für Nachbarzellen, welche sich auf einer unterschiedlichen Frequenz befinden und/oder welche eine unterschiedliche Funkzugangstechnologie, RAT, verwenden, welche definieren, dass, wenn eine vordefinierte Schwelle erreicht wird, ein Ereignis ausgelöst wird.

12. System nach Anspruch 11, wobei der Zugangspunkt ferner Mittel zum Veranlassen des Übertragens einer Zustandsübertragungsnachricht umfasst, wobei die Zustandsübertragungsnachricht das mobile Endgerät zum Übergehen in den Semi-Ruhezustand veranlasst.

13. System nach Anspruch 12, wobei der Zugangspunkt ferner Mittel zum Empfangen einer Zellenaktualisierung umfasst, wobei die Zellenaktualisierung eine Angabe beinhaltet, dass sich das mobile Endgerät im Semi-Ruhezustand befindet.

14. Computerprogramm, welches zum Veranlassen des Durchführens eines Verfahrens nach einem der Ansprüche 1 - 5, wenn das Programm durch einen Computer ausgeführt wird, konfiguriert ist.

## Revendications

1. Procédé réalisé par un terminal mobile, comprenant :
l'obtention, d'un point d'accès, de conditions de déclenchement de rapport de mesure pour des cellules voisines qui sont sur une fréquence différente et/ou qui utilisent une technologie d'accès radio (RAT) différente, définissant que lorsqu'un seuil prédéfini est satisfait, un événement est déclenché ;
la mesure de cellules voisines ; et
la détermination du fait de savoir si le seuil a été satisfait et, si tel est le cas :
la provocation d'un passage d'état du terminal mobile à un état semi-inactif ; et
la provocation d'un transfert à une cellule voisine, sans attendre une commande de transfert,
dans lequel l'état semi-inactif est un état dans lequel le terminal mobile garde la connexion de ressources radio (RRC) avec le point d'accès et dans lequel le contexte de terminal est stocké.

2. Procédé selon la revendication 1, comprenant en outre :
la provocation du passage d'état à l'état semi-inactif dans une autre circonstance dans laquelle une ou plusieurs conditions prédéterminées sont remplies.

3. Procédé selon la revendication 2, dans lequel une liaison montante est configurée de sorte à être rétablie dans l'état semi-inactif en se basant sur un message de rétablissement de connexion de commande de ressources radio et/ou sur une transmission en liaison montante par le biais d'un identifiant temporaire de réseau radioélectrique de cellule.

4. Procédé selon l'une quelconque des revendications 2 ou 3, dans lequel une liaison descendante est configurée de sorte à être rétablie dans l'état semi-inactif en se basant sur un ordre de canal de commande de liaison descendante physique et/ou par le biais d'un canal de radiomessagerie.

5. Procédé selon l'une quelconque des revendications 2 à 4, comprenant en outre :
la provocation de la transmission d'un message pendant qu'il se trouve dans l'état semi-inactif, dans lequel le message indique un transfert à la cellule candidate.

6. Appareil pour un terminal mobile comprenant :
au moins un processeur ; et
au moins une mémoire comprenant un code de programme d'ordinateur, la ou les mémoires et le code de programme d'ordinateur étant configurés, avec le ou les processeurs, pour contraindre l'appareil au moins :
à obtenir, d'un point d'accès, des conditions de déclenchement de rapport de mesure pour des cellules voisines qui sont sur une fréquence différente et/ou qui utilisent une technologie d'accès radio (RAT) différente, définissant que lorsqu'un seuil prédéfini est satisfait, un événement est déclenché ;
à mesurer des cellules voisines ; et
à déterminer si le seuil a été satisfait et, si tel est le cas :
à provoquer un passage d'état du terminal mobile à un état semi-inactif ; et
à provoquer un transfert à une cellule voisine, sans attendre une commande de transfert,
dans lequel l'état semi-inactif est un état dans lequel le terminal mobile garde la connexion de ressources radio (RRC) avec le point d'accès et dans lequel le contexte de terminal est stocké.

7. Appareil selon la revendication 6, dans lequel la ou les mémoires comprenant le code de programme d'ordinateur sont en outre configurées, avec le ou les processeurs, pour contraindre l'appareil à :
provoquer le passage d'état à l'état semi-inactif dans une autre circonstance dans laquelle une ou plusieurs conditions prédéterminées sont remplies.

8. Appareil selon la revendication 7, dans lequel une liaison montante est configurée de sorte à être rétablie dans l'état semi-inactif en se basant sur un message de rétablissement de connexion de commande de ressources radio et/ou sur une transmission en liaison montante par le biais d'un identifiant temporaire de réseau radioélectrique de cellule.

9. Appareil selon l'une quelconque des revendications 7 ou 8, dans lequel une liaison descendante est configurée de sorte à être rétablie dans l'état semi-inactif en se basant sur un ordre de canal de commande de liaison descendante physique et/ou par le biais d'un canal de radiomessagerie.

10. Appareil selon l'une quelconque des revendications 7 à 9, dans lequel la ou les mémoires comprenant le code de programme d'ordinateur sont en outre configurées, avec le ou les processeurs, pour contraindre l'appareil à :
provoquer la transmission d'un message pendant qu'il se trouve dans l'état semi-inactif, dans lequel le message indique un transfert à la cellule candidate.

11. Système comprenant :
un appareil tel que défini selon l'une quelconque des revendications 6 à 10 ; et
un point d'accès comprenant des moyens pour fournir, à l'appareil, des conditions de déclenchement de rapport de mesure pour des cellules voisines qui sont sur une fréquence différente et/ou qui utilisent une technologie d'accès radio (RAT) différente, définissant le moment où, lorsqu'un seuil prédéfini est satisfait, un événement est déclenché.

12. Système selon la revendication 11, dans lequel le point d'accès comprend en outre des moyens pour provoquer la transmission d'un message de transmission d'état, dans lequel le message de transmission d'état provoque le passage du terminal mobile à l'état semi-inactif.

13. Système selon la revendication 12, dans lequel le point d'accès comprend en outre des moyens pour recevoir une mise à jour de cellule, dans lequel la mise à jour de cellule comprend une indication que le terminal mobile se trouve dans l'état semi-inactif.

14. Programme d'ordinateur configuré pour provoquer la réalisation d'un procédé selon l'une quelconque des revendications 1 à 5 lorsque ledit programme est exécuté par un ordinateur.
